# EUROPEAN PATENT APPLICATION

(11) **EP 1 071 024 A2**
(43) Date of publication of application: **24.01.2001**
(21) Application number: 00306086.0
(22) Date of filing: 18.07.2000
(51) Int. Cl.: G06F 17/30, G06F 17/21

(54) **Method and apparatus for splitting markup flows into discrete screen displays**

(30) Priority: 23.07.1999 US 145440 P; 06.06.2000 US 588798
(71) Applicant: Phone.Com Inc., Redwood City, CA 94063 (US)
(72) Inventor: Walden, Eugene, San Fransisco CA 94131 (US); Martin, JR; Bruce K, Palo Alto CA 94306 (US); Schwartz, Bruce V, San Mateo CA 94402 (US)
(74) Representative: Ablett, Graham Keith

(57) **Abstract**

The present invention relates to a method and apparatus for portable devices that display markup data. A processing unit is configured to detect automatically parts in markup data content, each part corresponding to one type of user input mode. The unit is configured to display each part separately on a screen of the display unit such that one type of input mode is provided for each screen.

## Description

### FIELD OF THE INVENTION

The present invention pertains to the field of data communications. In particular, the present invention relates to techniques for displaying markup data. More particularly, the present invention relates to techniques for splitting markup flow data into discrete screen displays.

### BACKGROUND OF THE INVENTION

Among markup languages available today, there are only a few, which are specifically designed for mobile or portable devices. One type of markup language available for portable devices is the Wireless Markup Language (WML). WML is a markup language based on XML (extensible Markup Language). WML is intended for specifying content and user interfaces for portable devices. Such portable devices include wireless telephones, pagers, and personal data assistants (PDA).

In particular, WML includes four major functional areas, which are text presentation and layout area, card/deck organization metaphor area, inter-card navigation and linking area, and string parameterization (correlating a string of text to a variable) and state management area.

In the text presentation and layout area, WML includes text and image support, which includes a variety of formatting and layout commands. For example, in the text presentation and layout area, boldfaced text may be specified.

In the card/deck organizational metaphor area, WML allows all information to be organized into a collection of *cards* and *decks*. Cards are pages that specify one or more units of user interaction (e.g., a choice menu, a screen of text or a text entry field). A user navigates through a series of WML cards, reviews the contents of each, enters requested information, makes choices, and moves on to another card. Cards are grouped together into decks. A WML deck is collection of pages or cards. A WML deck is similar to a Hyper Text Markup Language (HTML) page, for example, a WML deck may be identified by a Universal Resource Locator (URL) address and may also be the unit of content transmission.

In the inter-card navigation and linking area, WML includes support for managing explicitly the navigation between cards and decks. WML also includes provisions for event handling in a mobile device, which may be used for navigational purposes or to execute scripts. WML also supports anchored links such as links similar to those found in HTML4.

In the string parameterization and state management area, WML allows decks to be parameterized using a state model. Variables can be used in the place of strings and are substituted at run-time. This parameterization allows for more efficient use of network resources.

A problem associated with portable devices processing markup data content such as a WML page is that the graphics capabilities for a display on portable devices is limited. For example, a display for a portable device typically provides only a few lines of text of twelve to twenty characters for display. The input mechanism for a portable devices is also limited. For example, the input mechanism for a portable device typically includes a keypad having a fewer number of keys than a personal computer (PC) keyboard.

Another problem associated with portable devices processing markup data content is that portable devices are modal, that is, such devices may operate only in one type of mode at a time. Specifically, portable devices may be incapable of being in a text "input" mode and a menu "select" mode at the same time because each mode requires control of a screen of the device. For example, a WML page that contains markup data content having a text entry interaction ("input mode") and a menu selection interaction ("select mode") on a single screen of a portable device may cause user confusion and input problems.

In particular, a user may have difficulty determining whether the user is in the user is "input mode" or "select mode." Consequently, if an input key corresponding to the letter, e.g., "A," is a choice in the "selection mode" and is a letter to be used in the "input mode," it may be difficult to determine whether the input key is designated for the "selection mode" or the "input mode." Furthermore, because of the limited number of keys on portable devices, it may be difficult for a user to select one of the input modes or to navigate through the input modes for each screen of a portable device.

Another problem associated with portable devices processing markup data content is that the markup data Content may be very large for portable devices to process and display. One type of markup language such as HTML provides tags such as a <DIV> tag that act as break points to delineate a screen of markup data content. Such break points, however, are application specific and typically designed, based on a set size for HTML pages, to provide break points for HTML applications running on personal computing systems.

### SUMMARY OF THE INVENTION

The present invention includes a method and apparatus for displaying markup data content in separate screens. Parts in markup data content are automatically detected. Each part corresponds to one type of user input mode. Each part is displayed separately on a screen of a display such that only one type of input mode is provided for each screen.

Other features of the present invention will be apparent from the accompanying drawings and from the detailed description which follows.

### BRIEF DESCRIPTION OF THE DRAWINGS

The present invention is illustrated by way of example and not limited by the figures of the accompanying drawings, in which like references indicate similar elements and in which:
Figure 1 illustrates an exemplary system in which the present invention may be practised;
Figure 2A illustrates an exemplary mobile device for the exemplary system of Figure 1;
Figure 2B is an internal block diagram of one embodiment of the exemplary mobile device of Figure 2A;
Figure 2C illustrates exemplary markup data content providing multiple user input modes for a mobile device;
Figures 2D and 2E illustrate a mobile device displaying separate screens for each user input mode for the markup data content of Figure 2C;
Figure 2F illustrates exemplary markup data content representing a page providing a form having multiple input fields for a personal computer;
Figure 2G illustrates an exemplary screen of a browser running on a personal computer for the markup data content page of Figure 2F;
Figure 2H illustrates exemplary markup data content for a portable device providing a form having multiple input fields in which each input field is displayed in separate screens with a submit function for the last screen;
Figure 2I through 2K illustrate a mobile device displaying separate screens for each input field mode for the form of Figure 2H;
Figure 3A is an internal block diagram of one embodiment of a server device;
Figure 3B is an internal block diagram of one embodiment of a mobile device;
Figure 4 illustrates an exemplary account structure; and
Figures 5 illustrates a state diagram for performing an operation of automatically splitting markup data content according to one embodiment.

### DETAILED DESCRIPTION

A method and apparatus for displaying markup data content are described. The markup data content display techniques described herein operate well for mobile or portable electronic devices with limited input mechanisms and small display screens. As described in greater detail below, parts in markup data content are automatically detected. Each part corresponds to one type of user in put mode. Each part is displayed separately on a screen of a display such that only one type of input mode is provided for each screen.

The display techniques described herein disambiguate user input and display of different input modes for users of mobile or portable "electronic" devices by presenting the content in pieces, parts, or fragments (collectively "parts"), such that each part contains no more than one input field or select list.

For example, a user of a portable electronic device may receive a WML page having text "input" mode content and menu "select" mode content. The portable electronic device is capable of processing the markup data content such that text "input" mode content and menu "select" mode content are exported out and processed to be displayed separately on discrete screens of an electronic portable device. Alternatively, that text "input" mode content and menu "select" mode content may be fragmented into separate pieces of code and the separate pieces of code are processed to be displayed separately on discrete screens of an electronic portable device.

The display techniques also allow users of portable devices to navigate easily through the discrete screens having one type of user input mode. For example, a form having multiple input fields are presented in separate discrete screens for each input field in which a "submit" function is delayed until a user has provided input for all the input fields.

Furthermore, large WML pages may be split automatically into multiple parts or "fragments" to optimize both presentation and downloading of the markup data content to the portable electronic device. The markup data content display techniques provide advanced solutions to mobile or portable devices such as, for example, wireless telephones, to display complicated layouts designed for relatively advanced systems on the Internet.

The markup data content display techniques described herein may also be implemented in numerous ways. For example, a computing device may implement a method to perform the markup data display techniques. Furthermore, a computer readable medium containing program code, which is processed, may be implemented for automatically generating discrete screen displays from markup language-based files received from a data network. The markup data content display techniques may reduce the burden on web page developers to design web sites for various screen and input characteristics thereby allowing mobile devices to interact seamlessly with web sites.

In the following description, references to "one embodiment" or "an embodiment" mean that the feature being referred to is included in at least one embodiment of the present invention. Furthermore, separate references to "one embodiment" in this description do not necessarily refer to the same embodiment, however, neither are such embodiments mutually exclusive, unless so stated and except as will be readily appreciated by those skilled in the art.

In the following description, markup data content or markup language pages may be based on a markup language such as that contained in "Wireless Application Protocol Wireless Markup Language Specification Version 1.1" disclosed in U.S. Provisional Application 60/145,440, which is hereby incorporated herein by reference.

Furthermore, in the following description, references to mobile or portable electronic devices include wireless telephones, pagers, personal digital assistants (PDA), or other Internet-capable portable devices. Furthermore, mobile or portable electronic devices described herein may communicate with the Internet using wireless and wired communication protocols.

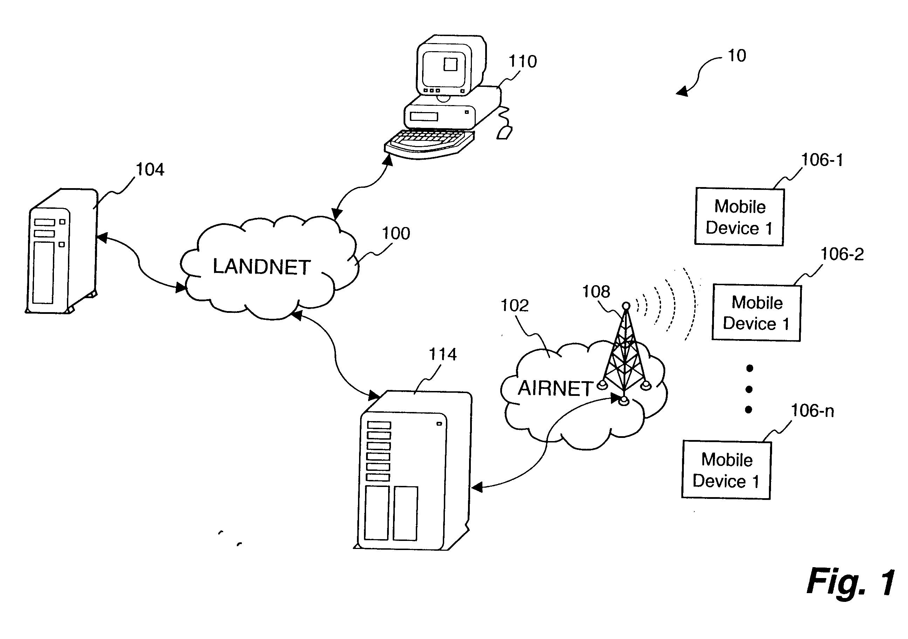

Figure 1 illustrates an exemplary system 10 in which the present invention may be practised. Referring to Figure 1, system 10 includes a network server 104, personal computer (PC) 110, and a link server 114 coupled to landnet 100 and airnet 102. System 10 also includes *n* mobile devices 1 through n (106-1 to 106-n) coupled to airnet 102 via antenna 108. Landnet 100 is coupled to airnet 102 via link server 114.

Landnet 100 is a landline network such as the Internet or Intranet. Alternatively, landnet 100 may be a private landline data network. Personal computer 110 may be a Pentium® processor-based desktop personal computer. For one embodiment, personal computer 110 runs a HyperText Markup Language (HTML) browser such as Netscape Navigator® browser from Netscape Communications Corporation.® A user of personal computer 110 may use a HTML browser to access information on network server 104 via landnet 100 using a HyperText Transfer Protocol (HTTP). For example, network server 104 may be a workstation from SUN® Microsystems, Inc. The information stored in network server 104 may be hypermedia information including HTML data designed for mobile devices 106.

The *n* mobile devices 106-1 to 106-n are serviced by airnet 102. Mobile devices 106 are interactive two-way communication devices. For example, mobile devices 106 may be wireless telephones, palm-sized computing devices, PDAs, or Internet-capable appliance remote controllers. Such two-way communication devices may communicate wirelessly with antenna 108 via airnet 102.

For one embodiment, antenna 108 represents a wireless carrier infrastructure that generally includes a base station and an operations and maintenance center. The base station controls radio or telecommunication links with mobile devices 106. The operations and maintenance center may include a mobile switching center performing the switching of calls between the mobile devices and other fixed or mobile network users. Furthermore, the operations and maintenance center may manage mobile account services such as authentication services, and may oversee the proper operation and setup of the wireless network. The hardware components and processes in carrier infrastructure 108 are not described as not to obscure unnecessarily carrier infrastructure 108.

A link server device 114 couples landnet 100 to airnet 102. Link server 114 functions as a bridge between landnet 100 and airnet 102. Link server device 114 may also be referred to as a proxy server or a wireless data server or a network gateway server. Link server 114 may be a workstation or a personal computer. Link server 114 allows airnet 102 and landnet 100 to communicate with each other.

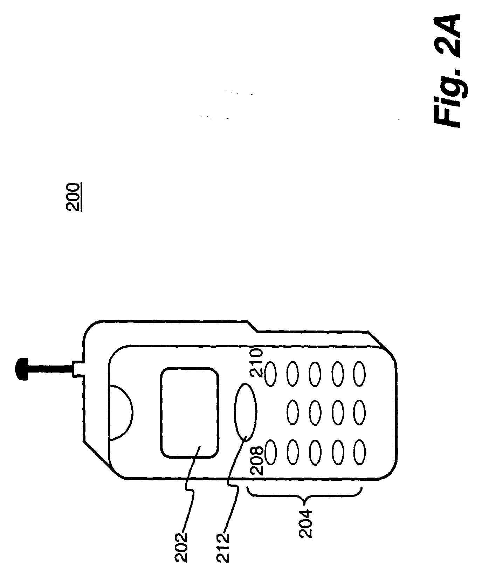

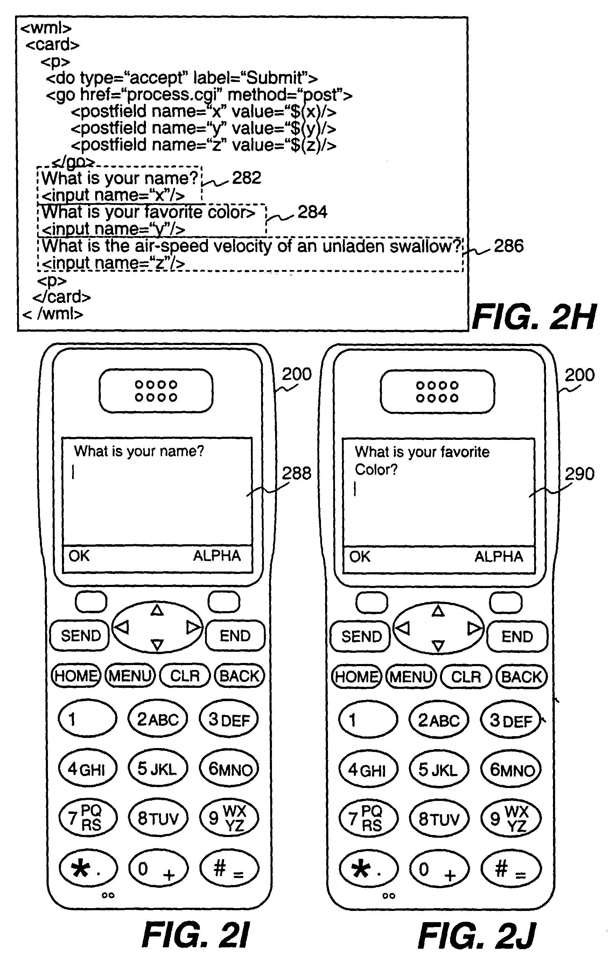

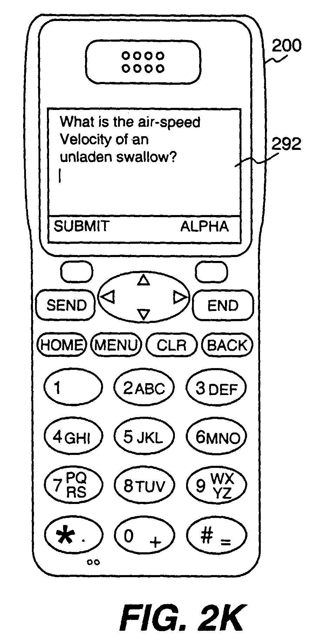

Figure 2A illustrates an exemplary mobile device 200, which may be used in the exemplary system 10 of Figure 1. Referring to Figure 2A, mobile device 200 is illustrated as a cellular or portable phone. Portable phone 200 includes a small screen 202 and an extended phone keypad 204. Extended phone keypad 204 includes generic keys 208 and 210 and a positioning key 212.

Screen 202 may be a liquid crystal display (LCD) for displaying data. For one embodiment, the size of screen 202 is limited by the size of portable phone 200. For example, screen 202 may provide only four lines of text of twelve or twenty characters for display. Generic keys 208 and 210 are used to activate soft keys displayed on screen 202. Positioning key 212 is used to reposition an element indicator or a cursor to activate, for example, a hyperlink displayed on screen 202. Alternatively, generic keys 208 and 210 and positioning key 212 may be replaced by other sets of designated keys in regular phone keypad 204.

For one embodiment, keypad 204 may be omitted and portable phone 200 may provide soft keys or icons on screen 202 as an input means for a user to interact with the portable phone 200. In the following embodiments, unless otherwise specifically described, keys or buttons are referred to as either physical keys or soft keys.

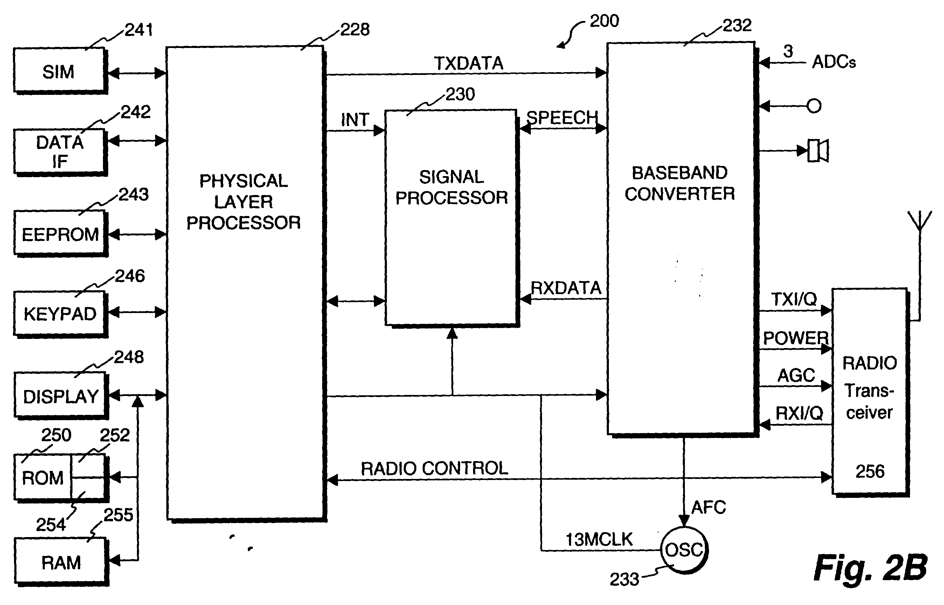

Figure 2B is an internal block diagram of one embodiment of the exemplary mobile device 200 of Figure 2A. Referring to Figure 2B, mobile device 200 includes radio transceiver 256, baseband converter 232, oscillator 233, signal processor 230, and physical layer processor 228 coupled to single inline memory (SIM) card 241, data interface 242, electrically erasable programmable memory (EEPROM) 243, keypad 246, display 248, read only memory (ROM) 250, random access memory (RAM) 255. For one embodiment, a client module 252 and support module 254 are contained within ROM 250. Alternatively, client module 252 and support module 254 may be contained within other memory devices such as RAM 255 and EEPROM 243.

Upon activation of a predetermined key sequence utilizing keypad 204, physical layer processor 228 causes client module 252 to communicate with link server 114 via a radio transceiver 256. Physical layer processor 228 may cause screen display 202 to provide a number of interactions for a user in which a number of key-in activities are required. For example, physical layer processor 228 may process instructions in a memory or instructions received from a remote source (e.g., a server) via a network to cause screen display 202 to provide a separate screen for each key-in interaction such as text "input" key-in interaction or menu "select" key-in interaction, which requires pressing keys on keypad 246 to input text or select a menu selection.

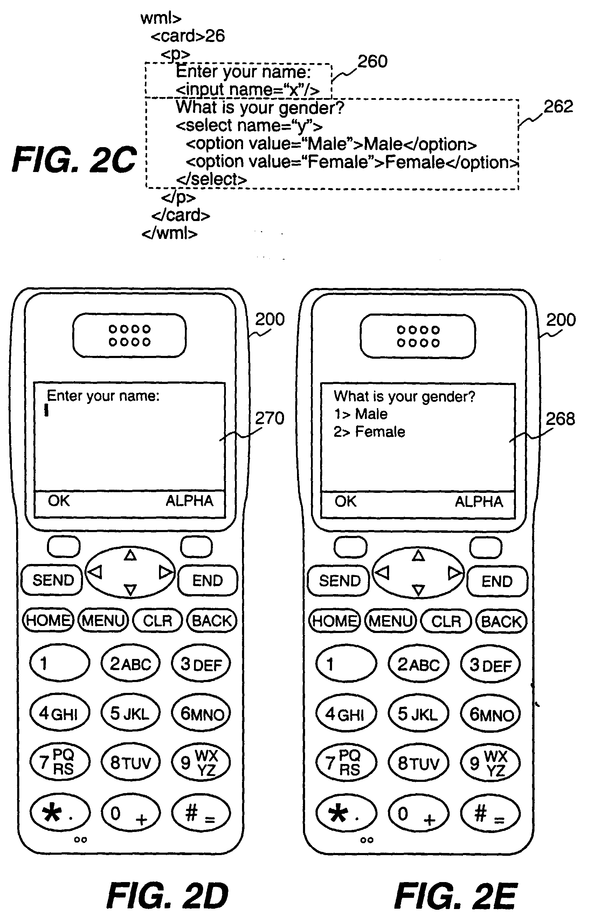

Figures 2C through 2E describe exemplary techniques for a mobile or portable device displaying separate screens for each user input mode based on markup data content having multiple user input modes.

Figure 2C illustrates exemplary markup data content containing code for providing multiple user input modes for a mobile device. Referring to Figure 2C, the exemplary markup data content contains code for text "input" mode in section 260 and menu "select" mode in section 262. Section 260 provides code for the text "input" mode, which asks a user to "Enter your name:." Section 262 provides code for the menu "select" mode, which asks a user "What is your gender?" and provides select options to a user to select either a "Male" selection option or a "Female" selection option. The exemplary markup data content shown in Figure 2C is reproduced below in Table 1.

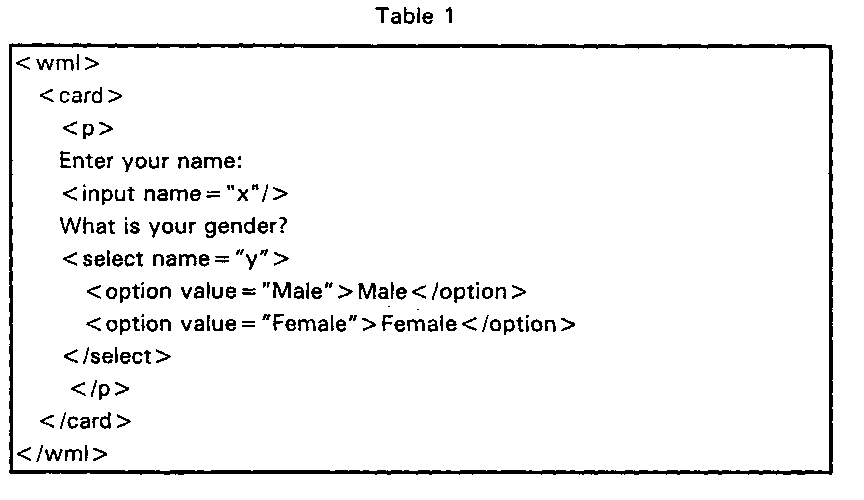

A user of portable "phone" device 200 may have difficulty providing input for the markup data content, as contained in Table 1, if the markup data content is displayed on the same screen of portable device 200. For example, if the name of a user is "ALICE" and the user is "Female" the user would have to press key "2" to enter the letter "A" for the text "input" mode and to select "2" associated with the "Female" option for the menu "select" mode. Consequently, it is difficult for the user to determine whether pressing the key "2" would correspond to the letter "A" for the text "input" mode or to the "Female" option for the menu "select" mode. Thus, user confusion and difficulty is created if multiple input modes are provided to a user on the same screen of a portable device.

Furthermore, because the input keys for portable device 200 is limited, it is difficult to map one set of keys for one input mode and a second set of keys for another input mode. Thus, to avoid such limitations, the following markup data content techniques split automatically markup data content having multiple input modes into separate parts or "fragments" for each input mode. Exemplary markup data content display techniques are illustrated in Figures 2D and 2E.

Figures 2D and 2E illustrate portable device 200 displaying separate screens for each user input mode for the markup data content of Figure 2C. As described herein, a screen or display screen relates to a physical display on a portable device, which typically includes a LCD screen. The LCD screen generally provides a 4 by 20 character LCD screen. The screen may display images, text, and characters.

For one embodiment, portable device 200 processes the markup data content as illustrated in Table 1 or Figure 2C and automatically detects parts 260 and 262. The detected parts 260 and 262 are displayed separately in discrete screens. For another embodiment, portable device 200 automatically detects parts 260 and 262 and fragments parts 260 and 262 into separate pieces of code as shown in Tables 2 and 3 below. For one embodiment, the separate pieces of code may be WML cards grouped together in a WML deck. Portable device 200 may contain instructions to allow portable device 200 to process the separate parts 260 and 262 and to display the parts in separate discrete screens.

Alternatively, a server (e.g., server 104) may process the markup data content contained in Table 1 or Figure 2C into separate parts or fragments as shown Tables 2 and 3, which downloads the parts or fragments to mobile device 200. Furthermore, a server may download markup data content having multiple user input modes and instructions to mobile device 200 for mobile device to use in separating or fragmenting parts of the downloaded markup data content. If a server does the processing, it may provide markup language links or pointers from one fragment to another. Furthermore, mobile device 200 may also provide markup language links or pointers from one fragment to another.

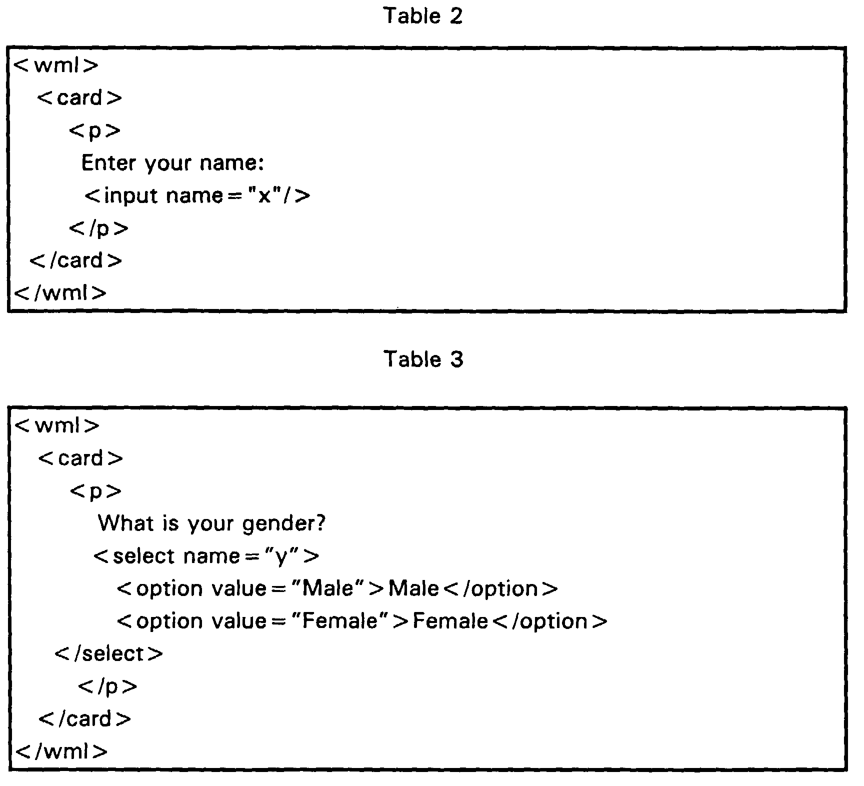

Referring to Figure 2D, the text "input" mode markup data content of Table 2 is displayed separately on discrete screen 270 of portable device 200. Discrete screen 270 provides a user interface for a user to "Enter your name:." Thus, discrete screen 270 provides a text "input" mode screen.

Referring to Figure 2E, the menu "select" mode markup data content of Table 3 is displayed separately on discrete screen 268 of portable device 200. Discrete screen 268 provides a user interface for a user to select a gender option of 'Male" or "Female" to the question "What is your gender?."

By splitting the markup data content having multiple input modes, a user is not confused in determining which input mode the user is in. Furthermore, the user is not confused in determining whether the input key is for one input mode or another input mode. For example, if a user's name is "Alice," at screen 270, pressing input key "2" would place the letter "A" in screen 270. The user would not be confused with the input mode of screen 268 because screen 268 would be shown separately. That is, a user would provide inputs to screens 270 and 268 separately.

Thus, portable device 200 is capable of splitting large markup data content into smaller parts or fragments to optimize processing of markup data content having multiple input modes. Alternatively, a server to portable device 200 is capable of splitting large markup data content into smaller parts or fragments to optimize downloading and, thus, processing of markup data content having multiple input modes.

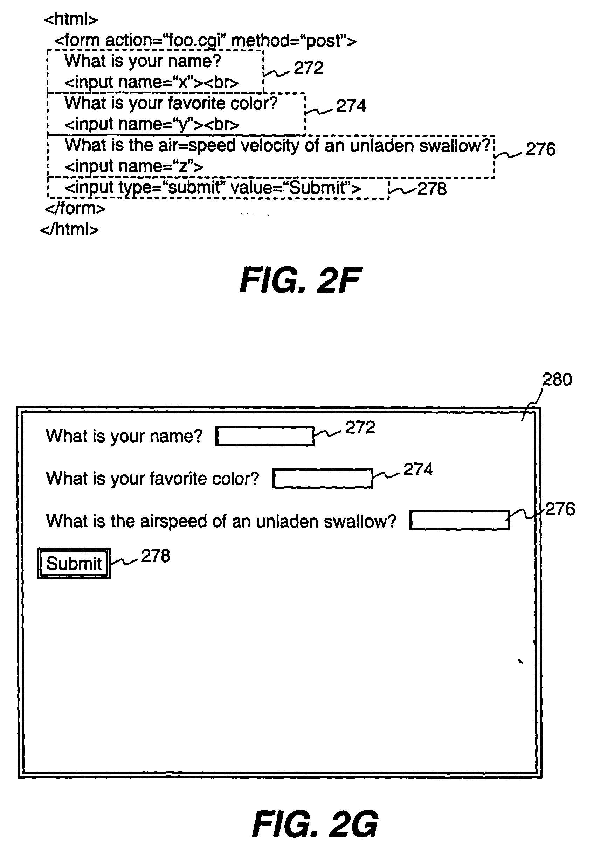

Figures 2F through 2K illustrate exemplary display techniques that allow users of portable devices to navigate easily through discrete screens having one type of user input mode. For example, a form having multiple input fields are presented in separate discrete screens for each input field in which a "submit" function is delayed until a user has provided input for all the input fields.

Figure 2F illustrates exemplary markup data content representing a page providing a form having multiple input fields for a personal computer. Referring to Figure 2F, the exemplary markup data content contains code for a user to input data for three input fields for a form. The exemplary markup data content is, for example, a HTML form. The markup data content contains a first input field in section 272, a second input field in section 274, and a third input field in section 276.

Section 272 provides code for a user to provide input to the question "What is your name?." Section 274 provides code for a user to provide input to the question "What is your favourite color?." Section 276 provides code for a user to provide input to the question "What is the airspeed of unladen swallow?." The exemplary markup data content also contains a section 278 for a "Submit" function that allows a user to submit the inputs for sections 272, 274, and 276 for the form. The exemplary markup data content shown in Figure 2C is reproduced below in Table 4.

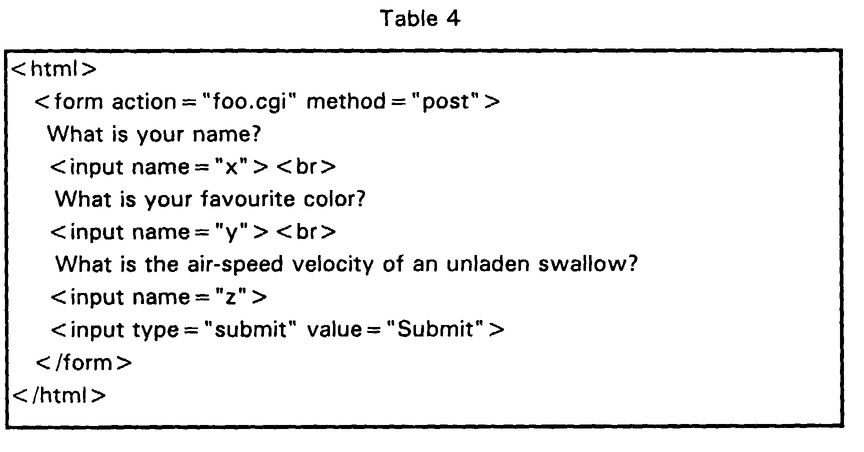

Figure 2G illustrates an exemplary screen 280 of a browser running on a personal computer for the markup data content page of Figure 2F. Screen 280 depicts a form having three input fields. Specifically, screen 280 includes an input field 272, input field 274, and input field 276, corresponding to the same sections in Figure 2F. Screen 280 also includes a "Submit" button 278 with the input fields in which a user activates to submit the inputs to input fields 272 through 276 for the form.

A user of portable device 200 presented with screen 280 (HTML page for a personal computer) may have difficulty navigating between the input fields. That is, a key must be designated for submitting an input for each input field and a key must be designated for submitting the form for all the input fields. As such, displaying all the input fields with a "submit" key or button may cause a user difficulty in navigating between the fields.

Thus, to avoid such limitations, the following exemplary markup data content techniques split automatically markup data content having multiple input modes into separate parts or "fragments" for each input mode. Such exemplary markup data content display techniques are illustrated in Figures 2H and 2K.

Figure 2H illustrates exemplary markup data content for portable device 200 providing a form having multiple input fields in which each input field is displayed in separate screens with a "submit" function for the last screen. The markup data content illustrated in Figure 2H is a WML content equivalent of the HTML content of Figure 2G.

Referring to Figure 2H, the exemplary markup data content provides a form having multiple input fields. Specifically, the exemplary markup data content contains code for a first input field in section 282, second input field in section 284, and third input field in section 286.

Section 282 provides code for a user to provide input to the question "What is your name?." Section 284 provides code for a user to provide input to the question "What is your favourite color?." Section 286 provides code for a user to provide input to the question "What is the airspeed of unladen swallow?." The exemplary markup data content also contains a section for a "Submit" function that allows a user to submit the inputs for sections 272, 274, and 276 for the form. The exemplary markup data content shown in Figure 2H is reproduced below in Table 5.

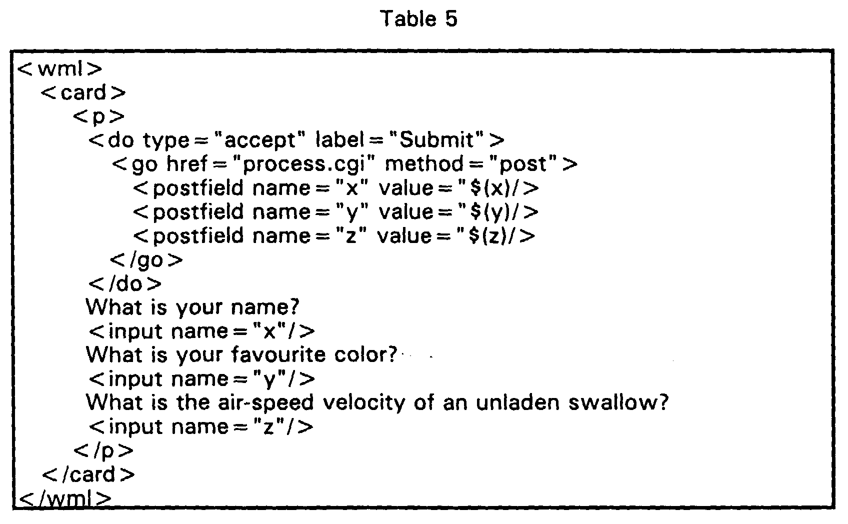

For the reasons explained above regarding Figures 2F and 2G, a user of portable device 200 may have difficulty providing input for the markup data content, as contained in Table 5, if the markup data content is displayed on the same screen of portable device 200. Thus, for one embodiment, portable device 200 exports out or fragments out sections 282, 284, and 286 and displays those sections separately in discrete screens. For another embodiment, portable device 200 fragments the sections into separate pieces of code, which will be displayed separately in discrete screens. A problem for a user then is navigating between the separate screens. Figures 21 through 2K provide exemplary techniques for a user to navigate through multiple discrete screens.

Figures 21 and 2K illustrate portable device 200 displaying separate screens for each input field mode for the form of Figure 2H. For one embodiment, portable device 200 processes the markup data content as illustrated in Table 5 or Figure 2H and automatically detects parts 282, 284, and 286 and fragments parts 282, 284, and 286 into separate pieces of code as shown in Tables 6 through 8, respectively. Portable device 200 may contain instructions to allow portable device 200 to process the separate parts 282, 284, and 286 and display the parts in separate discrete screens.

Alternatively, a server (e.g., server 104) may process the markup data content contained in Table 5 or Figure 2H into separate parts or fragments as shown Tables 6 through 8, which downloads the parts or fragments to mobile device 200. Furthermore, a server may download markup data content having multiple user input modes and instructions to mobile device 200 for mobile device to use in separating or fragmenting parts of the downloaded markup data content.

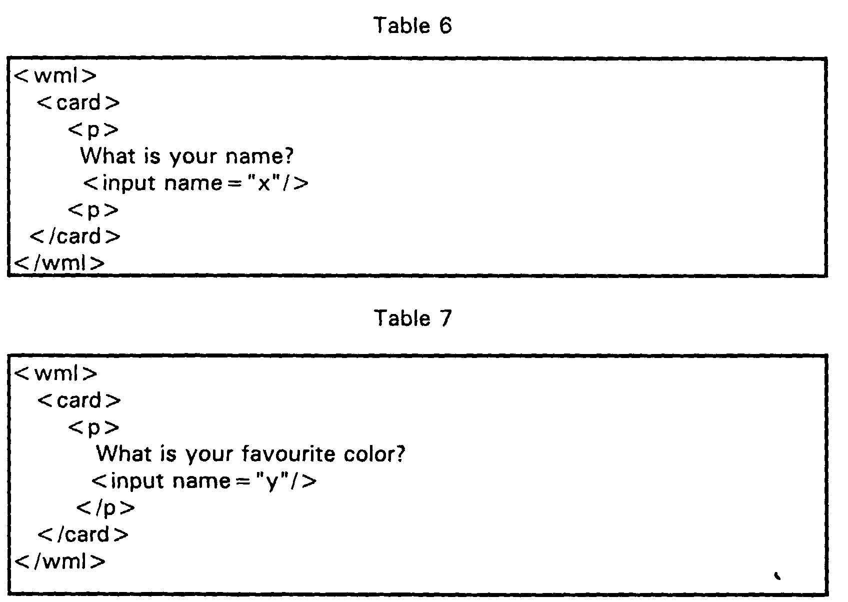

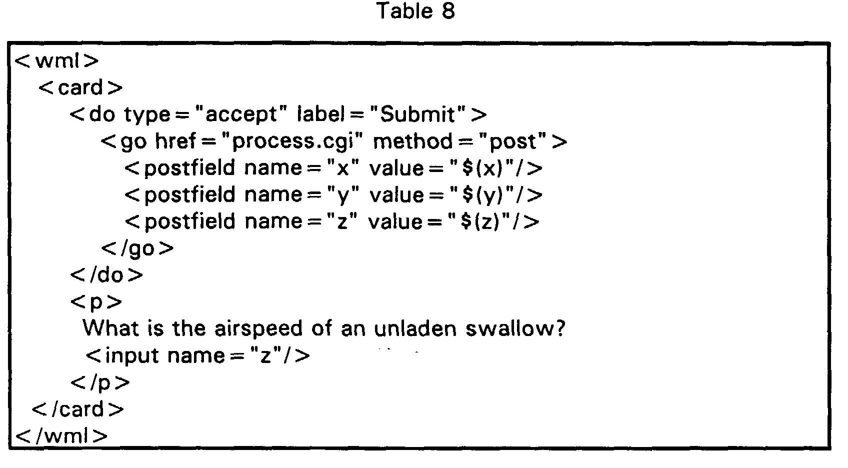

Referring to Figure 2I, the first input field in section 282 of the markup data content in Table 6 is displayed separately on discrete screen 288 of portable device 200. Discrete screen 288 provides a user interface for a user to answer the question "What is your name?." Thus, discrete screen 288 provides one input field mode screen. Screen 288 also provides an "OK" softkey to allow a user to submit the input and to proceed to the next input field screen 290 as shown in Figure 2J.

Referring to Figure 2J, the second input field in section 282 of the markup data content in Table 7 is displayed separately on discrete screen 288 of mobile device 200. Discrete screen 290 provides a user interface for a user to answer the question "What is your favourite color?." Thus, discrete screen 290 provides one input field mode screen. Screen 290 also provides an "OK" softkey to allow a user to submit the input and to proceed to the next input field screen 292 as shown in Figure 2K.

Referring to Figure 2K, the first input field in section 286 of the markup data content in Table 8 is displayed separately on discrete screen 292 of mobile device 200. Discrete screen 292 provides a user interface for a user to answer the question "What is the air-speed velocity of an unladen swallow?." Thus, discrete screen 292 provides one input field mode screen. Screen 292 also provides a "SUBMIT" softkey to allow a user to submit all the inputs for the form as shown in separate discrete screens 288, 290, and 292.

The form of Figure 2H is thus displayed in three separate screens. Screens 288 and 290 are provided with a "OK" softkey, which is used to allow a user to move sequentially from one screen to the next screen or from one input field to another input field. When the user has reached the last screen 292, the user is provided with a "SUBMIT" softkey to input all the fields for the form. Thus, the exemplary navigational techniques provide handling between implicitly split content. A "OK" softkey is provided for each card field screen except for the last card field screen. The last card field screen provides a "SUBMIT" softkey to submit all the inputs for the form.

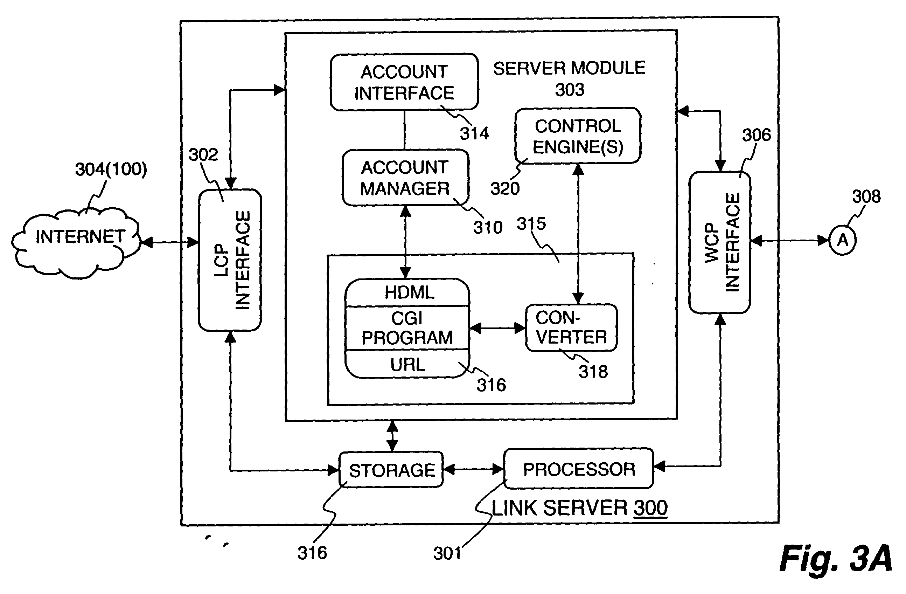

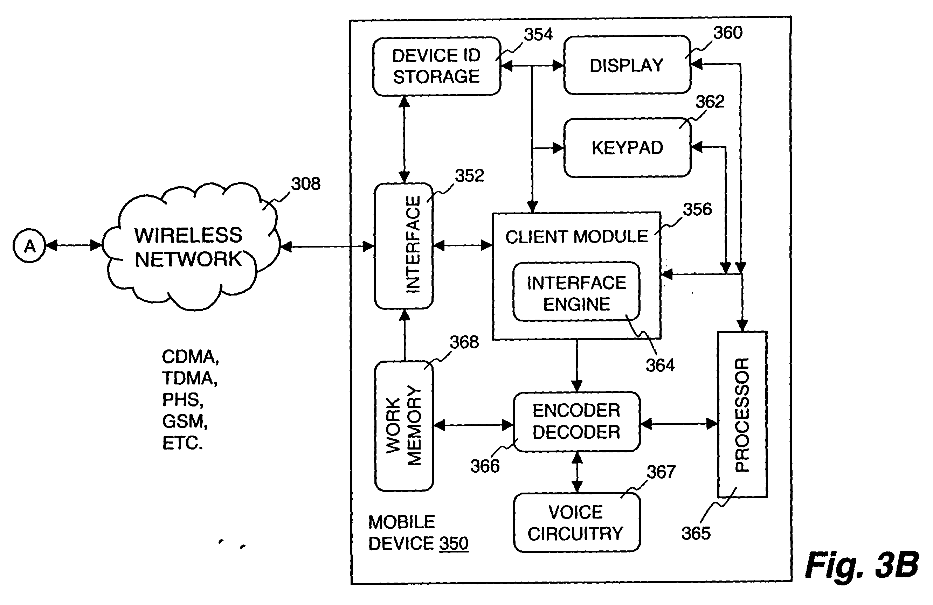

Figures 3A and 3B are internal block diagrams of a server device and a mobile or portable device, respectively, according to one embodiment. Referring to Figures 3A and 3B, link server 300 may represent link server 114 of Figure 1, which is typically a computer server. Mobile device 350 may correspond to one of the mobile devices 106 of Figure 1 or portable phone 200 of Figure 2. Basic methods, procedures, components, and circuitry in link server 300 and mobile device 350 are well understood by those skilled in the art and therefore are not described in detail.

Referring to Figure 3A, link server 300 includes a landnet communication protocol (LCP) interface 302 coupled to landnet 304 (e.g., the Internet), server module 303, and airnet 308 via storage 316 processor 301, and WCP interface 306, a wireless communication protocol (WCP) interface 306 coupled to server module 303, landnet 304 via processor 301, storage 316, and LCP interface 302, and wireless network 308 via a carrier infrastructure (not shown).

For one embodiment, LCP interface 302 implements a communication protocol for operating with landnet 304. For example, landnet 304 operates a HTTP communication protocol and LCP interface 302 is a HTTP interface for operating with the HTTP communication protocol of landnet 304. Wireless network 308 may operate using a wireless communication protocol suitable for a wireless network. For example, wireless network 308 may operate using a Wireless Session Protocol, Wireless Transaction Protocol, or Wireless Transport Layer Security protocol proposed by Wireless Application Protocol (WAP) forum.

Server module 303 is coupled between LCP interface 302 and WCP interface 306. For one embodiment, server module 303 is loaded in a memory and performs traditional server processing functions. For example, server module 303 includes a message processor 315 that performs protocol conversion processing from one communication protocol to another communication protocol. For one embodiment, server module 303 may perform a protocol conversion process between a WAP protocol and HTTP/TCP protocol using message processor 315.

Server module 303 also includes account manager 310. Account manager 310 manages a plurality of user accounts for all the mobile ' devices serviced by link server 300 via account interface 314. Each of the mobile devices, for example mobile device 350, is assigned a device identification (ID). Device ID can be a phone number of the device or an IP address or a combination of an IP address and a port number, for example: 204.163.165.132:01905 where 204.163.165.132 is the IP address and 01905 is the port number. The device ID is further associated with a subscriber ID created and administrated by a carrier in link server 300 as part of the procedures to activate a subscriber account for mobile device 350. The subscriber ID may take the form of, for example, 861234567-10900_pn.mobile.att.net by AT&T® Wireless Service, and is a unique identification to a mobile device. In other words, each of mobile devices 106 serviced by link server 114 in Figure 1 has a unique device ID that corresponds to a respective user account in link server 114. Account manager 310 is responsible for creating a user account for a mobile device that anonymously communicates with link server 114. In this case, account manager 310 ensures proper (limited) access of the anonymous mobile device to services provided by link server 114.

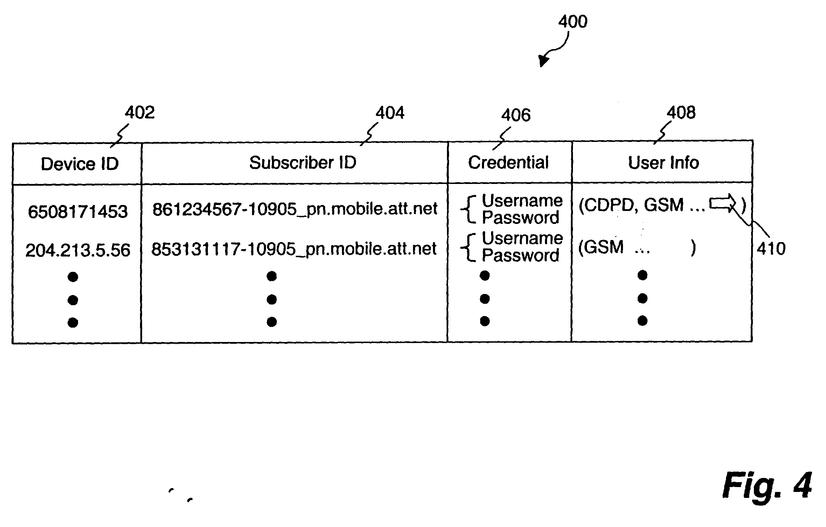

Figure 4 shows an exemplary account structure 400 of the user accounts managed by account manager 310. For one embodiment, user accounts may be located remotely from link server 300. For example, user accounts may be located remotely in one of the computing devices coupled to the landnet 304. Account manager 312 conducts the duties of account management through account interface 314 that has proper and secure access to the user accounts.

Account structure 400 includes device ID column 402, subscriber ID 404, credential information column 406, user information column 408. Device ID column 402 contains device IDs of mobile devices that further respectively correspond to subscriber IDs in subscriber ID column 404. Credential information column 406 lists respective credential information needed to access each associated account. User information column 408 may include the account configuration information, for example, device ID "6508171453" is a mobile phone that is pre-configured to work in a CDPD network and, probably, may be provided with an option to switch to a GSM network if necessary. Further entries in user information column 408 may include pointers or linkages 410 to other account related information, such as device parameters (e.g. size and types of the display screen), encryption schemes, call plan and customer service information that can be accessed by the mobile device.

Returning now to Figures 3A and 3B, maintaining a database of user accounts permit account manager 310 to conduct authentication and verification processes of the subscribed mobile devices and control access to provided services by all mobile devices (subscribed or anonymous devices) via wireless data network 308. Account manager 310 is responsible for managing independently the operations of each of control engine(s) 320. For one embodiment, each control engine is designated to a mobile device. The detailed operations of control engine(s) 320 are provided below with respect to Figure 3B.

The following description is now focussed on operations for mobile device 350 and its associated account. The following description may also apply to all mobile devices in communication simultaneously with link server 300.

For one embodiment, server module 303 of link server 300 includes message processor 315 having message digester 316 and a converter 318. Message processor 315 processes messages communicated between a network server and link server 300 using converter 318 and message digester 316 and generates, with respect to the messages, corresponding discrete messages to be communicated between link server 300 and mobile device 350

Message digester 316 receives messages from the network server and performs a sequence of message processing that includes interpretation and management of the messages and converter 318 converts the messages, according to the characteristics of the display in the target mobile device, to a number of discrete files, each is optimally organized and displayable on the display screen. The markup language that represents the message may include, but be not limited to, Handheld Device Markup Language (HDML), HyperText Markup Language (HTML), compact HTML, Wireless Markup Language (WML), Standard Generalized Markup Language (SGML) and Extensible Markup Language (XML).

For one embodiment, a message received such as the message represented in WML format as in Table 1 above is converted by converter 318. Converter 318 converts the message into multiple pieces, for example, as shown in Table 2 and Table 3 above. For another embodiment, a message received such as the message represented in WML format as in Table 5 above is converted by converter 318. Converter 318 converts the message into multiple pieces, for example, as shown in Tables 6 through 8 above.

In such display techniques, the original markup data content is split into two discrete displays, such display techniques work appropriately in conjunction with the limited input mechanism so as to avoid possible conflicts of key activities as explained regarding Figures 2D and 2E. Furthermore, in such display techniques, a user is able to navigate between screens as explained regarding Figures 2I through 2K.

The above display techniques may be implemented equally as well on the client side. Referring to Figure 3B, Mobile device 350 includes a corresponding WCP interface 352 that couples to airnet 308 via a RF transceiver (not shown) to receive incoming and outgoing data signals.

Device identifier (ID) storage 354 supplies a device ID to WCP interface 352. The device ID identifies a specific code that is associated with mobile device 350 and directly corresponds to the device ID in the user account in link server 300. In addition, mobile device 350 includes a client module 356 that performs many of the processing tasks performed by the mobile device 350 including establishing a communication session with line server 300 via carrier network 308, requesting and receiving data from carrier network 308, displaying information on a display screen 360 thereof, and receiving user input as well. Specifically, client module 356 is coupled to WCP interface 352 for the establishment of a communication session and the requesting and receiving of data. Alternatively, a wired interface may be used in place of WCP interface 352. Additionally, Client module 356 operates a message converter 364 which is similar to message converter 318. Message converter 364 receives messages from wireless data network 308 and converts messages into appropriate discrete files each of which corresponds to one display.

Mobile device 350 also includes a processor 365 coupled to client module 364 for performing processing functions for client module 356 and mobile device 350. Processor 365 controls keypad 362 and display 360. Processor 365 is also coupled to encoder/decoder 366, which is coupled to voice circuitry 367, work memory 368, and client module 356. Encoder/decoder 366, voice circuitry 367, and work memory are used by client module 356 and processor 365 to perform data processing functions.

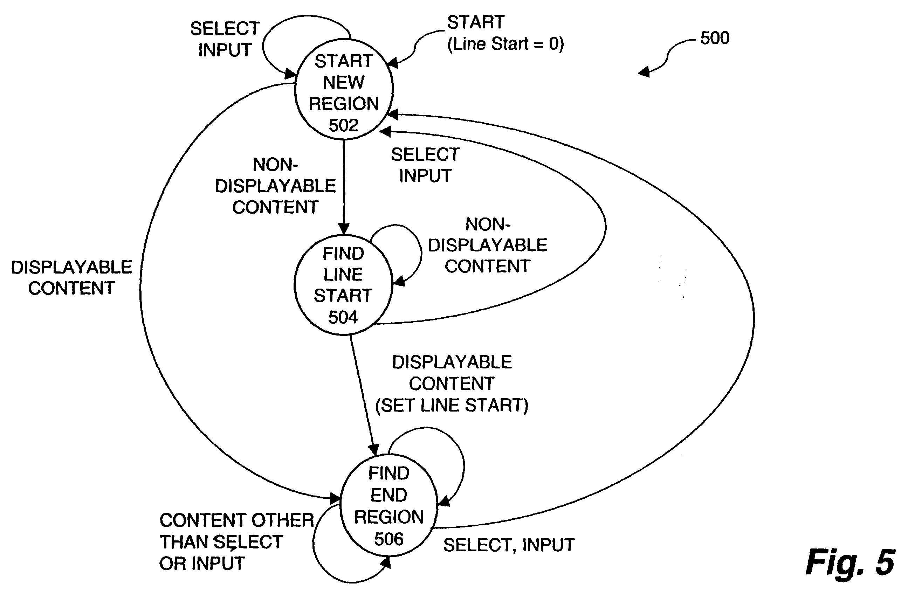

To further illustrate markup data content display techniques, Figure 5 shows a state diagram 500 with three states to process a received markup data content according to one embodiment. The following operation may be performed by a server or a mobile device. Starting with the first line in the file, the process in state diagram 500 enters state 502 to start a new region. A region is defined herein as a segment or fragment in the markup data content, which is to be presented in a single discrete screen. A region may include a few lines of text as displayable content or input mode content such as a menu of choices or inputs.

If it is detected that the segment is a displayable content, the process enters state 506. In other words, the displayable content is collected as a region. If it is detected that the segment starts with either "select" or "input," the process returns to state 506 to exhaust the "select" or "input" until other than the select or input is reached. If it is detected that the segment starts with a non-displayable content that include, for example, tags or other on-event semantics, the process goes to state 504 to find which line that actually starts the displayable content, the select, or input makeup. As illustrated in state 504, once the "select" or "input" is detected, the process goes to state 502 to start a new region, otherwise it goes to state 506 when it detects the displayable content.

State 506 indicates the end of a region started at state 502 and will be changed to state 502 to start a new region when additional "select" or "input" is detected. Each detected region may be displayed in separate discrete screens. Alternatively, each detected region may be fragmented or exported out into separate parts, for example, pieces of code, to be displayed separately in discrete screens.

Exemplary C code listing implementing the operations of Figure 5 is provided below.

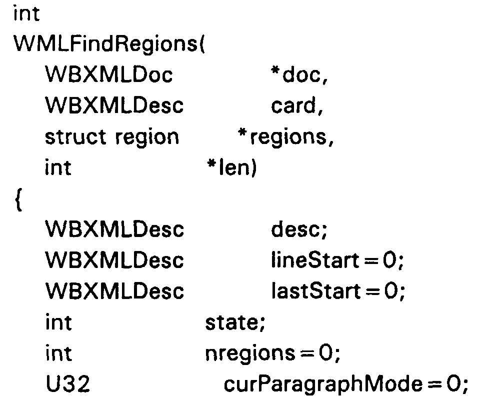

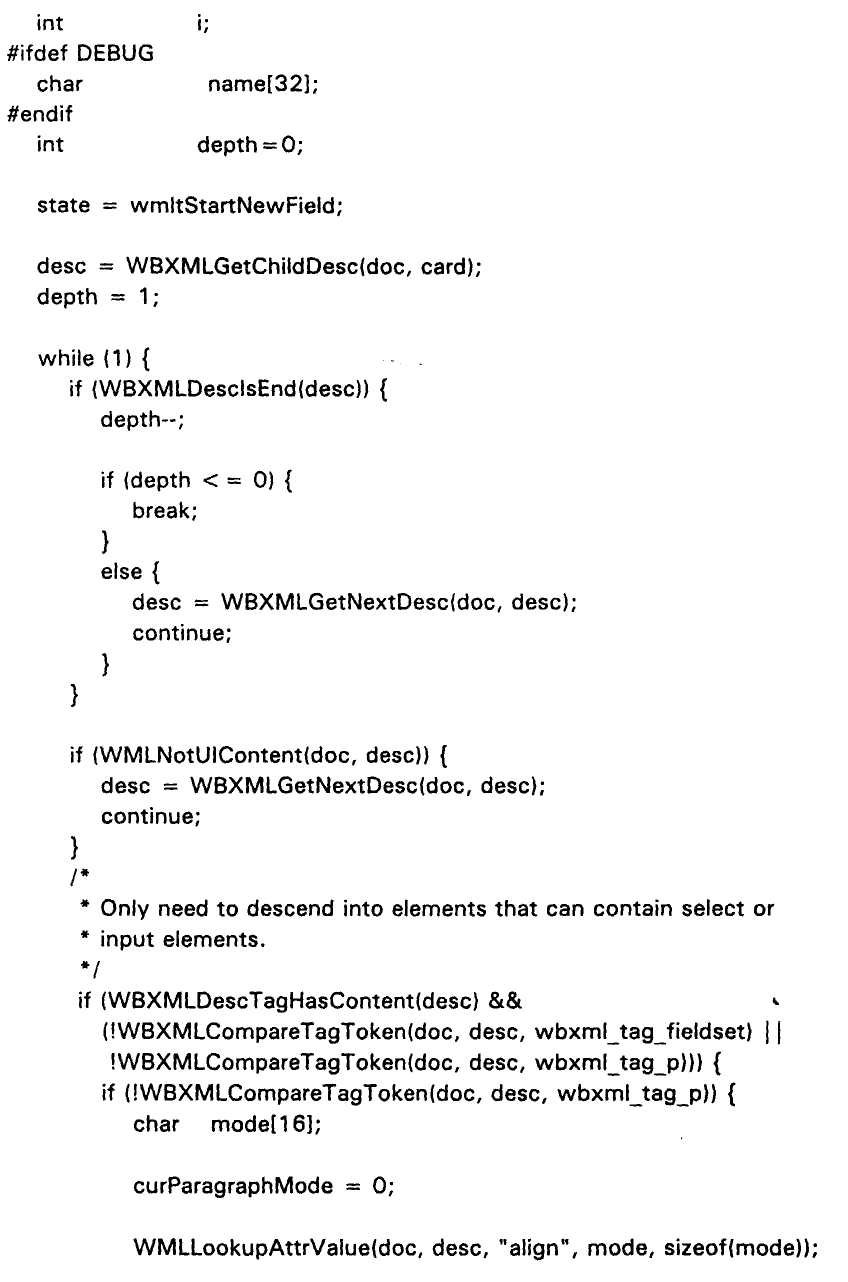

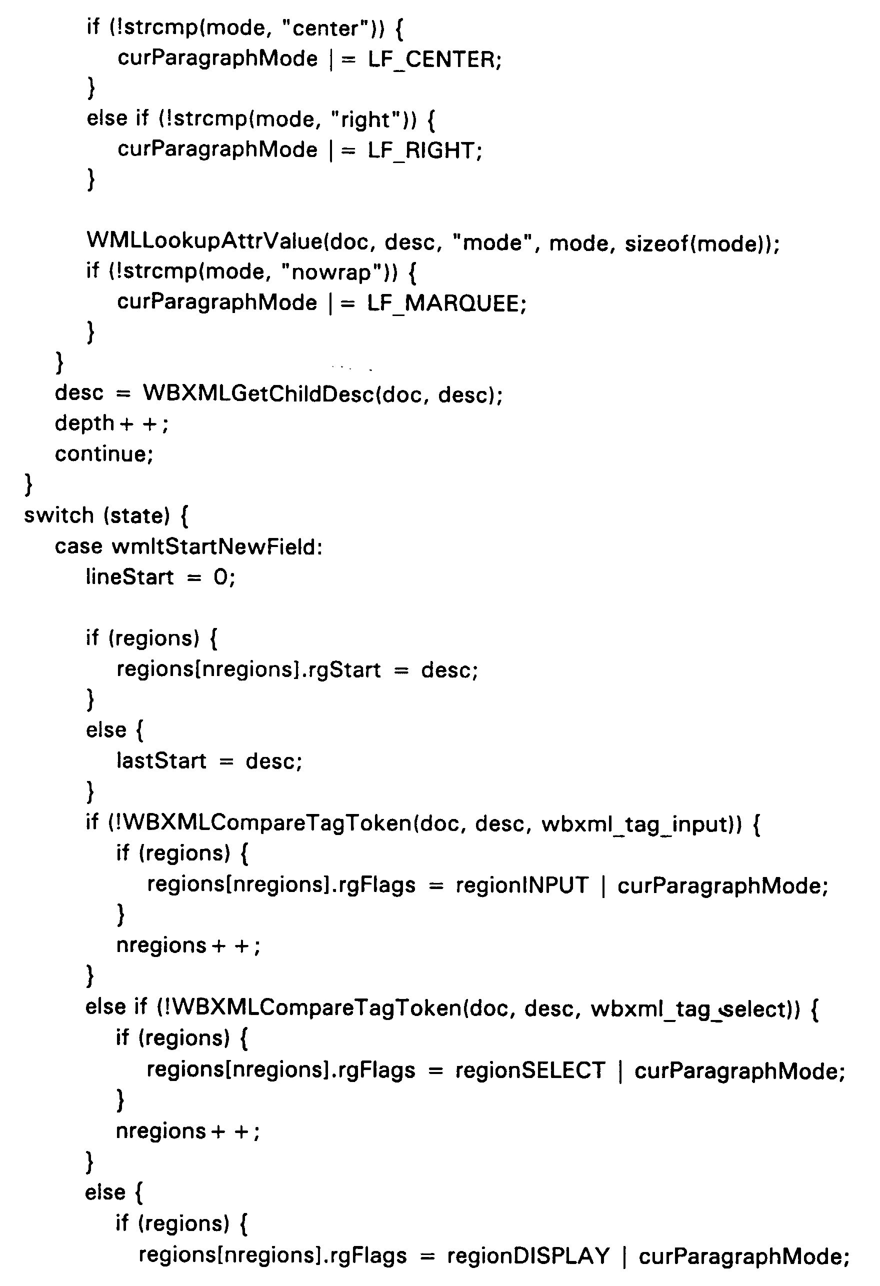

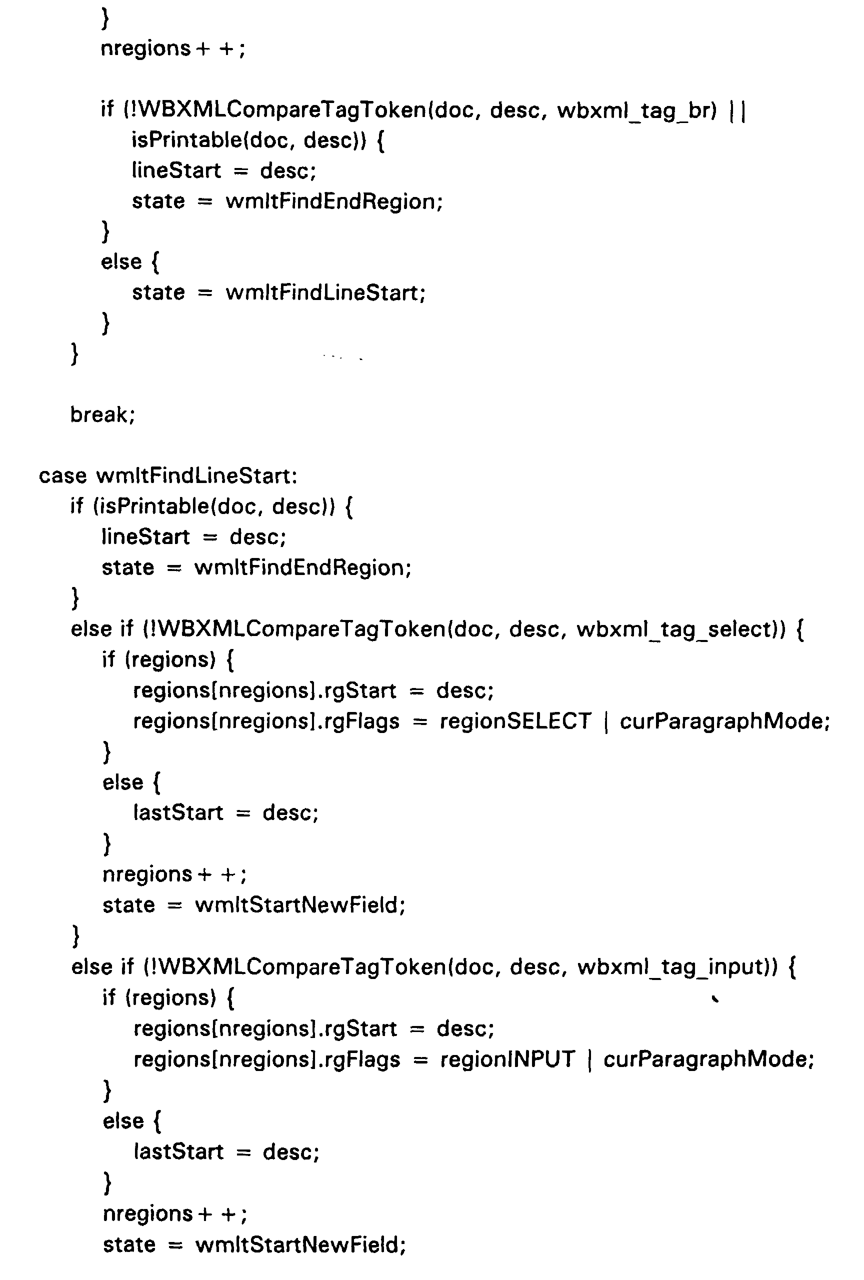

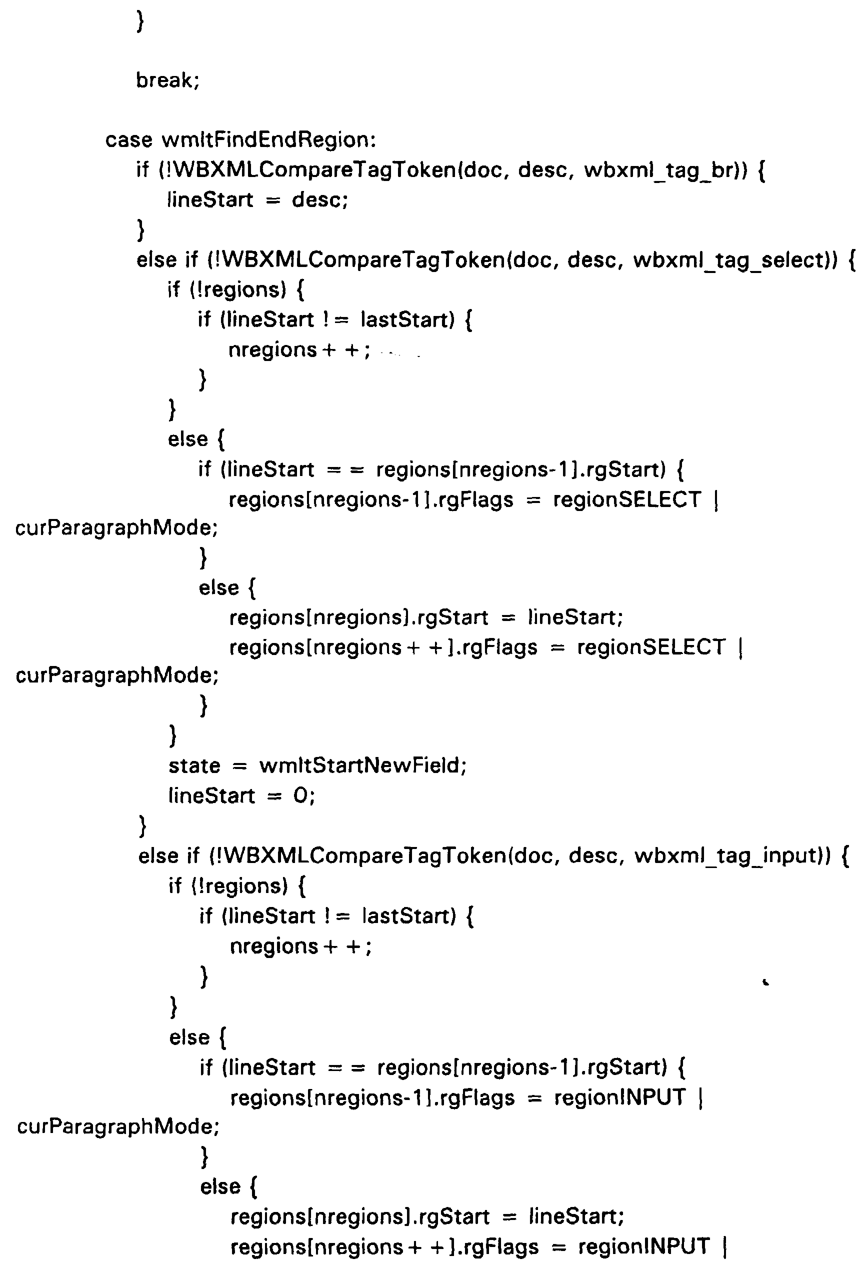

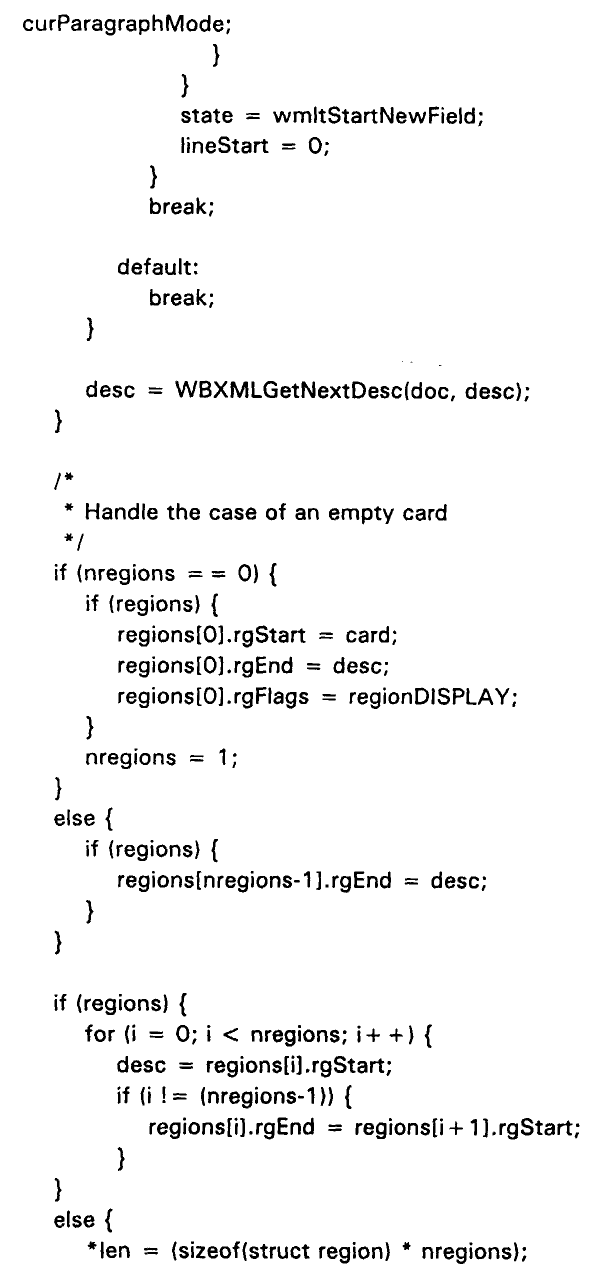

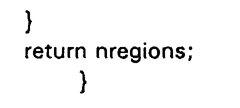

Thus, a method and apparatus for splitting markup flows into discrete screen displays have been described.

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative sense rather than a restrictive sense.

## Claims

1. A method for displaying data, the method comprising:
automatically detecting parts in markup data content, each part corresponding to one type of user input mode; and
displaying each part separately on a screen of a display such that one type of user input mode is provided for each screen.

2. A method according to claim 1 wherein the automatically detecting parts in markup data content includes a select input mode or a text entry input mode.

3. A method according to claim 1 or 2 wherein the automatically detecting parts in markup data content includes fragmenting the detected parts into separate pieces of code.

4. An apparatus comprising:-
a display unit; and
a processing unit configured to detect automatically parts in markup data content, each part corresponding to one type of user input mode, and configured to display each part separately on a screen of the display unit such that one type of input mode is provided for each screen.

5. A method for automatically generating discrete screen displays from a markup language file received from a data network, the method comprising:-
detecting regions in the markup language file, each of the regions comprising a segment of the markup language file and conforming to one type of screen display; and
exporting each of the regions for displaying separately on a display screen.

6. A medium readable by a machine, the medium having stored thereon a sequence of instructions which, when executed by the machine, cause the machine to:-
detect regions in the markup language file, each of the regions comprising a segment of the markup language file and conforming to one type of screen display; and
export each of the regions for displaying separately on a display screen.

7. A medium readable by a machine, the medium having stored thereon a sequence of instructions which, when executed by the machine, cause the machine to:-
automatically detect parts in markup data content, each detected part corresponding to one type of user input mode; and
display each detected part separately on discrete screens of a display such that one type of user input mode is provided for each screen.

8. An apparatus comprising:-
a display;
a wireless interface configured to receive markup data from a wireless network;
a message converter coupled to the wireless interface and configured to convert received markup data from the wireless interface into discrete parts, each part corresponds to one type of user input mode; and
a processor coupled to the message converter and configured to display each part separately on discrete screens of the display such that one type of user input mode is provided for each screen.

9. A method for a network server, the method comprising:-
automatically detecting parts in markup data content, each part corresponding to one type of user input mode;
fragmenting the detected parts; and
sending the fragmented parts to a user of a portable device, the fragmented parts to be displayed on discrete screens of a display of a portable device.

10. A network server comprising:-
a processing unit configured to detect automatically parts in markup data content, each part corresponding to one type of user input mode, and to fragment the detected parts; and
a transmitting unit configured to send the fragmented parts to a portable device, the fragmented parts to be displayed on discrete screens of the portable device.
